Europäisches Patentamt

European Patent Office

Office européen des brevets

(19)

(11) Numéro de publication: **0 225 812**
**B1**

(12) **FASCICULE DE BREVET EUROPEEN**

(45) Date de publication du fascicule du brevet:
**10.01.90**

(51) Int. Cl.⁴: **B61D 1/02,** B61D 31/00,
B62D 47/02

(21) Numéro de dépôt: **86402190.2**

(22) Date de dépôt: **03.10.86**

(54) **Bloc pour logement des passagers et de leurs bagages dans les lieux de transit et véhicules et véhicules en comportant application.**

(30) Priorité: **09.10.85 FR 8514942**

(43) Date de publication de la demande:
**16.06.87 Bulletin 87/25**

(45) Mention de la délivrance du brevet:
**10.01.90 Bulletin 90/2**

(84) Etats contractants désignés:
**BE CH DE FR GB IT LI**

(56) Documents cités:
**WO-A-85/02153**
**FR-A- 2 146 570**
**FR-A- 2 158 617**
**FR-A- 2 403 253**
**US-A- 3 784 989**

(73) Titulaire: **Legrand née Baleine du Laurens, Anne Marie Louise Eugénie, 98, rue de Rennes, F-75006 Paris(FR)**
Titulaire: **Legrand, Elisabeth, 20, rue du Revenant, Saint-Malo(FR)**
Titulaire: **Legrand, Marc, 25, Domaine de l'Ile, Illkirch (Bas-Rhin)(FR)**
Titulaire: **Berthet née Legrand, Christine, Les Avallais, Bage la Ville (Ain)(FR)**
Titulaire: **Legrand, Hervé, 119bis, boulevard de Sévigné, Rennes(FR)**
Titulaire: **Legrand, Xavier, 98, rue de Rennes, F-75006 Paris(FR)**

(72) Inventeur: **Legrand Pierre, Décédé(FR)**

(74) Mandataire: **Mongrédien, André et al, c/o BREVATOME 25, rue de Ponthieu, F-75008 Paris(FR)**

## Description

La présente invention concerne des blocs pour bagages et passagers en lieux de transit ou en véhicules par air, mer, route, rail en particulier les voitures de chemin de fer, comprenant des empilements de places semi-couchées de relaxation superposées en tête-bêche appelés ci-après "sièges-relax". On connaît de tels empilements de sièges-relax par le brevet américain n° 3.784.989 du présent demandeur. Ces sièges-relax étant tous, soit secondairement de largeur constante de la tête au pied, soit principalement à implantation en trapèze effilé vers le pied qui seront appelés ci-après "trapézoïdaux", ces empilements étant jusqu'à présent connus comme intégrés dans divers blocs compacts.

La présente invention perfectionne le brevet français n° 2.403.253 du présent demandeur qui comporte, notamment sur rail, de tels blocs compacts successifs longitudinaux médians, en présentant de tels blocs d'un type entièrement nouveau.

Le brevet français n° 2.403.253 procurait certes deux avantages essentiels: d'une part la position anti-choc par le profil relax longitudinal dont la concavité assure une retenue avant-arrière permanente rappelant celle que l'on obtient par harnais ou ceinture ventrale, sans être prisonnier d'une sangle ; d'autre part, la remarquable vue individuelle semi-panoramique pour tous. Mais ce brevet ne résolvait qu'imparfaitement les quatre problèmes suivants, accessoires mais non négligeables :
primo la sécurité des bagages durant le sommeil; Secundo, l'accès par échelles aux étages supérieurs; Tertio, la circulation des voyageurs dans les deux couloirs longitudinaux latéraux; Quarto, le volume perdu par trop grande largeur des deux couloirs, les deux WC-lavabos symétriques de chaque extrémité de largeur totale nécessaire, 140 cm étant reliés par une suite de blocs compacts plus étroits de largeur 100 cm.

L'amélioration inattendue qu'apporte la présente invention tient à ce que les quatre inconvénients précités sont dûs à la trop faible largeur desdits blocs compacts. D'une part, les bagages sont dans un passage public à la portée d'éventuels gens peu scrupuleux, et leur surveillance, même à proximité, cesse durant le sommeil. D'autre part les deux couloirs longitudinaux latéraux ont une largeur, 80 cm, trop grande pour que lesdites échelles d'accès puissent être apposées sur leurs parois externes, trop éloignées des sièges-relax, ce qui impose des échelles mobiles moins simples qui de plus, contrarient, même momentanément, la circulation dans les couloirs.

La présente invention remédie à ces autre inconvénients, sans perdre les deux avantages essentiels précités. De plus, elle augmente nettement le volume de bagages alloué par personne, tout en diminuant sensiblement leur hauteur moyenne pondérée de chargement.

Selon l'invention, le bloc parallélépipédique rectangle, pour lieux de transit et véhicules par air, mer, route, rail, ayant deux faces verticales opposées de jonction éventuelle avec d'autres blocs, identiques, en suite rectiligne, tandis que les deux autres faces verticales latérales bordent chacune un empilement de sièges-relax superposés en tête-bêche, se caractérise en ce que ces deux empilements sont distants l'un de l'autre, de façon à créer dans l'intervalle un espace intermédiaire divisé en casiers de rangement de bagages superposés.

Selon une autre caractéristique, lesdits casiers sont superposés à raison de deux par étage pour les deux occupants voisins, situés à cet étage. Selon une autre caractéristique, les deux sièges-relax de chaque etage se partagent leur dit casier de rangement correspondant au moyen d'une cloison de séparation transversale passant par le milieu du bloc, chaque casier de rangement individuel étant un parallélépipède aux six faces closes, à l'exception de l'ouverture d'accès des bagages pratiquée avec inclinaison horizontale dans la face latérale de chaque profil relax côté tête.

Selon une autre caractéristique, les jeux d'introduction des bagages dans lesdites ouvertures permettent d'uniformiser les hauteurs des casiers de rangement jusqu'au plafond, sauf celle des rangements inférieurs qui est plus grande encore car elle descend jusqu'au sol.

Selon une autre caractéristique, un véhicule comprend une suite rectiligne axiale médiane continue de tels blocs identiques, à sièges-relax de largeur constante ou trapézoïdaux, tous orientés dans le sens de l'axe longitudinalement, cette suite étant flanquée de deux couloirs longitudinaux latéraux, l'accès aux étages supérieurs se faisant au moyen d'échelles verticales fixes, solidaires de ladite paroi externe desdits couloirs, disposées chacune face au milieu de chaque bloc.

D'autres caractéristiques apparaîtront au cours de la description suivante, donnée uniquement comme exemple, illustratif et non limitatif, et concernant une voiture sur rail pour fixer les idées et chiffrer certains résultats.

La figure 1 est le plan schématique d'une voiture sur rail selon l'invention, présentant une série de blocs en suite rectiligne médiane, les sièges-relax des dits empilements qui encadrent les dits casiers de rangement de bagages de chaque bloc étant de largeur constante ou trapézoïdaux.

La fig. 2 est une élévation latérale d'un des blocs de la fig. 1, dans le cas de blocs à quatre étages, qui précise le volume des casiers de rangement.

La fig. 3 complète la fig. 2 en précisant l'ouverture des casiers de rangement.

La fig. 4 est une coupe transversale en élévation d'un bloc des figures 1, 2, 3, dans le cas où les sièges-relax sont de largeur constante.

La fig. 5 est la vue en plan d'un étage impair des figures 1, 2, 3, 4.

La fig. 6 est un détail de réalisation de la figure 5.

La fig. 7 est la vue en plan d'un étage impair des figures 1, 2, 3, dans le cas où les sièges-relax sont trapézoïdaux.

La fig. 8 est la vue en plan d'un étage pair du bloc de la fig. 6, avec en plus un étage alterné en trait pointillé.

Pour la description, on adoptera les mêmes chiffres de référence, que les sièges-relax soient de largeur constante ou trapézoïdaux, en y ajoutant toutefois l'indice prime pour les figures avec sièges-relax trapézoïdaux.

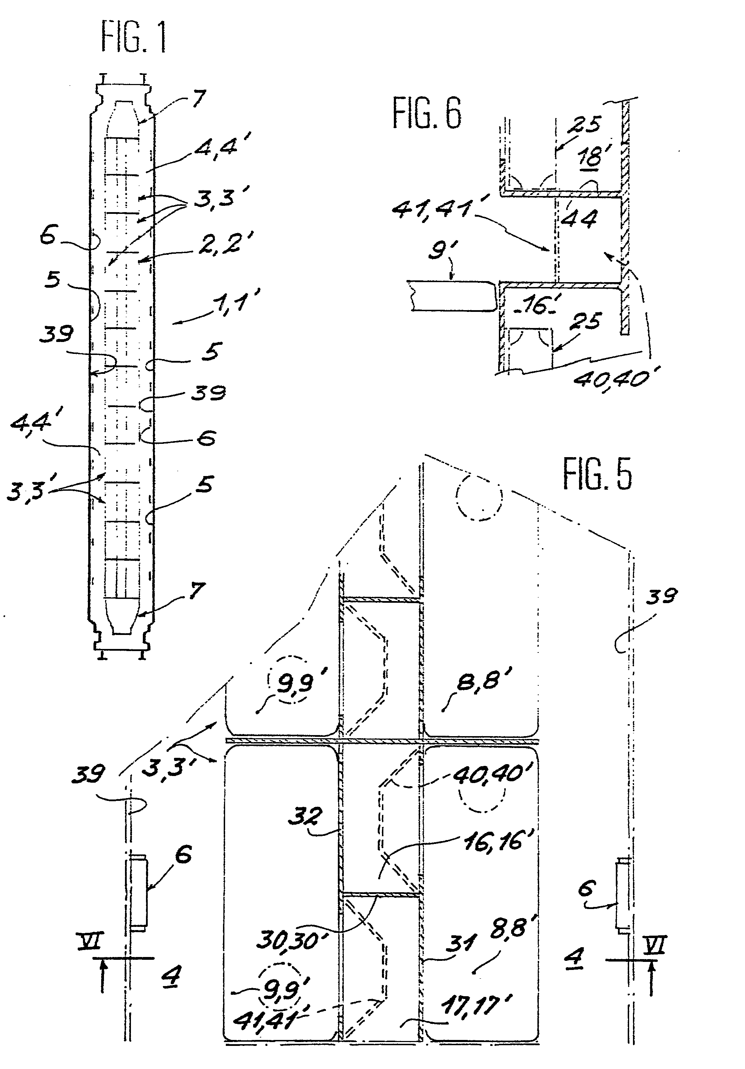

La fig. 1 est une vue en plan schématique d'une voiture sur rail 1, 1' présentant une suite longitudinale médiane 2,2', de douze blocs longitudinaux 3,3', de grande largeur selon l'invention, pourvus chacun de deux empilements non figurés de sièges-relax, de largeur constante ou trapézoïdaux, cette suite 2,2' étant flanquée de deux couloirs longitudinaux latéraux 4,4' dont les parois externes 5 portent à intervalles réguliers des échelles verticales 6 fixées face au milieu de chaque bloc 3,3', cette suite 2,2' étant prolongée à chaque extrémité par un couple connu 7, de deux WC-lavabos à parois cylindriques de largeur totale sensiblement égale à celle des blocs 3,3'.

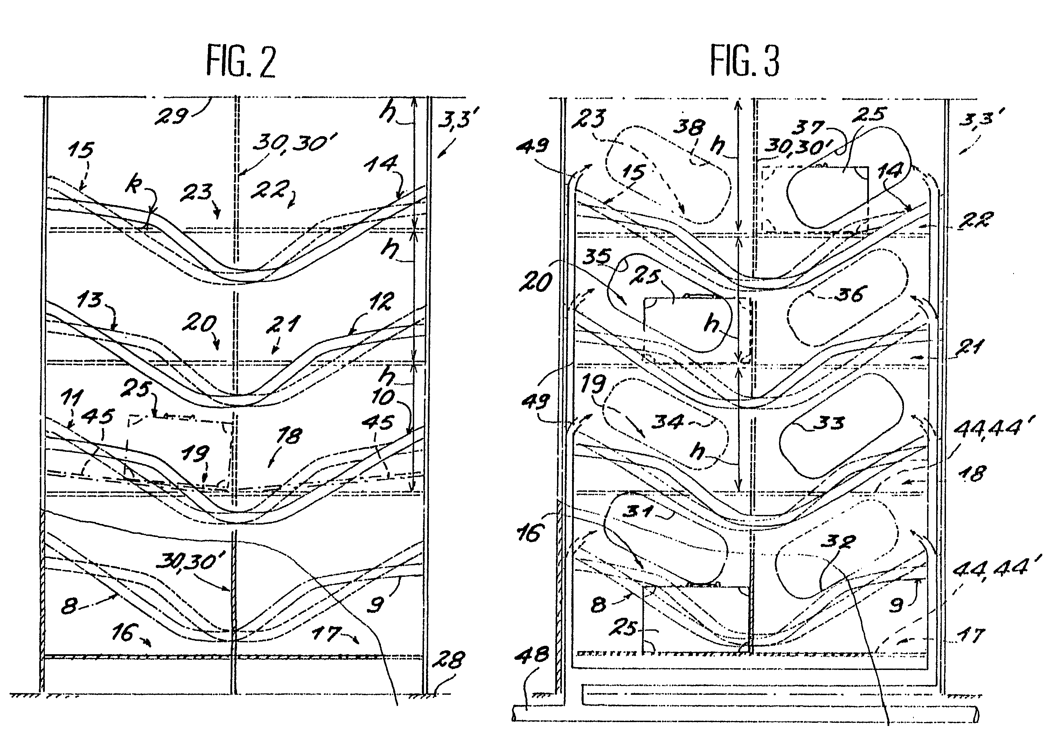

La fig. 2 représente en élévation latérale un bloc 3,3' montrant les profils des relax 8 à 15 d'épaisseur k de 3 à 5 cm disposés sur quatre étages, de largeur constante ou trapézoïdaux, et montrant des volumes de rangements parallélépipédiques 16 à 23 correspondants, chaque casier de rangement se trouvant du côté tête du siège relax. Les volumes des casiers de rangement inférieurs 16, 17 descendent jusqu'au sol 28, tandis que les rangements supérieurs 22, 23 s'élèvent jusqu'au plafond 29 du bloc 3,3'. Les deux volumes de rangement de chaque étage 16,17; 18,19; 20,21; 22,23 sont séparés entre eux par la cloison transversale milieu 30,30' du bloc.

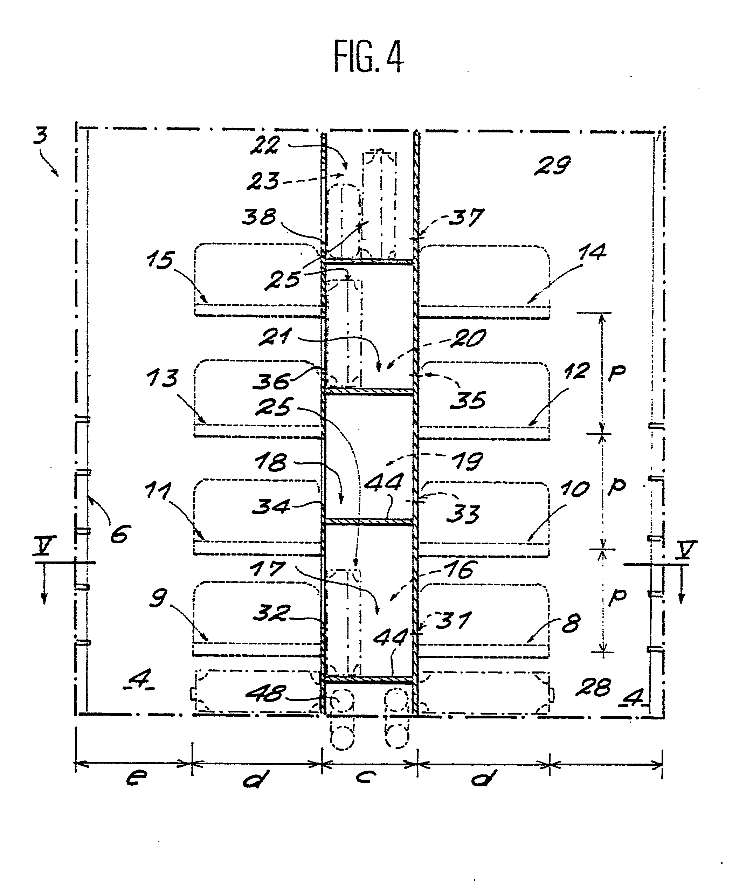

La fig. 3 complète la fig. 2 par le fait qu'on y a représenté les ouvertures latérales 31 à 38 permettant d'accéder aux volumes de rangement respectifs 16 à 23. En liaison avec la fig. 4, on voit que les surfaces 44 et 44' définissent les hauteurs superposées et identiques (h = environ 56 cm) des volumes de rangement, de sorte qu'une valise 25 au format approximatif de 75x50x25cm puisse passer aisément par les ouvertures inclinées 31 à 38 pour être posées sur les plans horizontaux 16 à 23, ou inclinés 45. Les couchettes relax sont au pas vertical p=52,5 cm, sous plafond 29 de 260 cm, l'inférieur étant à 25 cm. Pour faciliter l'engagement des bagages, les dites surfaces peuvent être de légère pente symétrique 45, le bas étant au milieu du bloc.

La fig. 4 est une coupe transversale selon les points bas des profils relax 8 à 15 dans le cas de largeur constante, où ont été reconduites les références des figs. 1, 2, 3, représentant successivement les deux rangements parallélépipédiques 16 à 23 situés l'un derrière l'autre à chaque étage, avec leurs ouvertures d'accès 31 à 38 correspondantes.

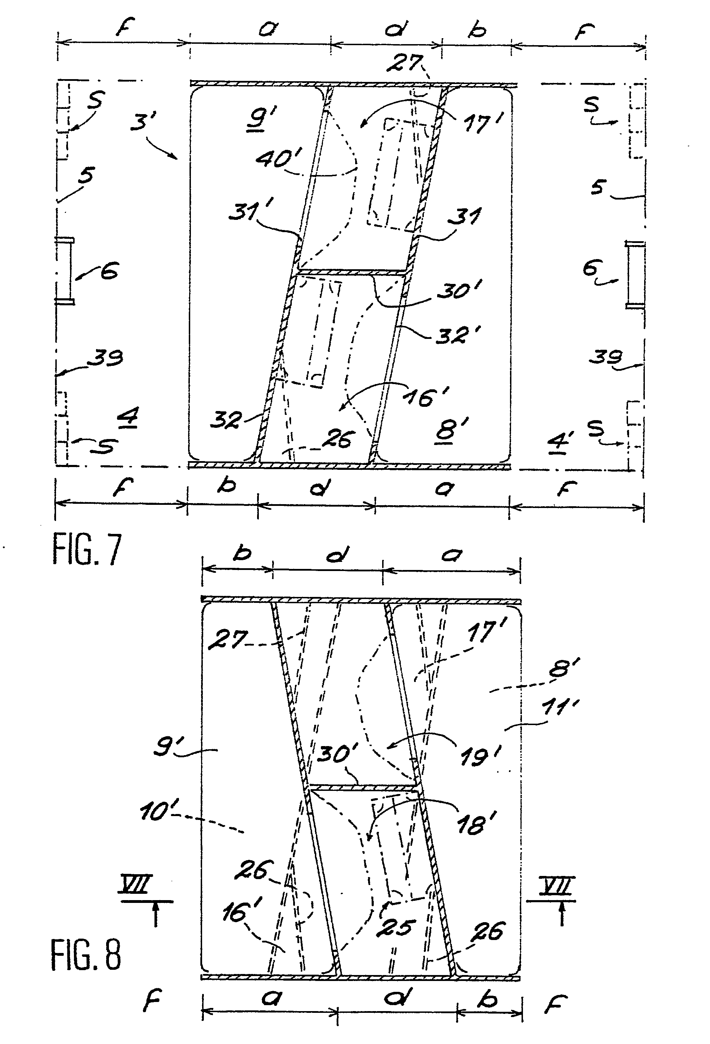

La fig. 5 est la vue en plan de l'étage inférieur des figs. 2,3,4, les ronds indiquant le côté tête des couchettes relax. La cloison transversale 30 sépare les deux rangements 16,17. Un appui-coude interne 40,41 sous la couchette relax 8,9 est représenté sur la fig. 6.

Les figs. 7 et 8 où les chiffres de référence ont l'indice prime, sont l'équivalent des figs. 4 et 5, dans le cas le plus intéressant où les sièges-relax sont trapézoïdaux, ceux de même niveau 8 , 9' ou 10', 11' étant d'orientation inverse. Les lettres a à f des figs. 4 à 8 représentent des largeurs. Exemple a = 60 cm, b = 30 cm, c = 40 cm, d = 50 cm, e = 40 cm, f = 50 cm. Avec des sièges trapézoïdaux de 60 cm en tête et 30 cm au pied, on augmente de 10 cm la largeur des couloirs et des rangements. Les volumes de rangement sont alors des parallélépipèdes obliques 16', 17' fig. 7, l'obliquité s'inversant par étages successifs. Etant donnée la très grande largeur 50 cm des rangements, le pied de chaque siège trapézoïdal peut y empiéter par une enclave 26, 27 à implantation triangulaire en déplaçant partiellement en 46, 47 les parois verticales 31 et 32. Des rateliers à skis verticaux S sont disposés le long des couloirs. La sécurité des bagages est absolue, même durant le sommeil puisqu'on ne peut les saisir qu'en passant sur le corps du dormeur. De plus la circulation dans chaque couloir est dégagée de tout matériel mobile. En outre, l'invention procure, pour les bagages, un très net avantage, comparé par exemple aux voitures françaises type "Corail", ayant ses rangements non surveillés aux extrémités, et cela tant en volume individuel alloué (225 litres contre 115 litres) qu'en hauteur moyenne pondérée de chargement (126 cm contre 159 cm).

En se retournant de côté vers l'extérieur du siège-relax fig. 7, dos arrondi et tête penchée, on peut remonter légèrement le bassin pour l'engager dans le creux 31,32 sur l'appui-coude 40', 41', d'autant plus aisément que la taille de l'occupant est inférieure à la valeur nominale de 1 m 90. Sur la fig. 3 on voit enfin, la ventilation, très importante vue la grande capacité; elle vient par l'air conditionné d'un ou deux collecteurs 48 longitudinaux horizontaux au sol des rangements inférieurs, qui alimentent en dérivation des gainages verticaux 49 longeant les parois verticales desdits rangements, et débouchant du côté tête de chaque loge d'occupant des dits sièges-relax. Par ailleurs, le volume au sol sous les relax inférieurs est disponible, soit pour d'autres bagages, soit pour des appareils auxiliaires.

**Revendications**

1. Bloc parallélépipédique rectangle (3,3') pour logement de passagers et de leurs bagages dans les lieux de transit et les véhicules par air, mer, route, rail, ayant deux faces verticales opposées, de jonction éventuelle avec d'autres blocs identiques en suite rectiligne (2,2'), tandis que les deux autres faces verticales latérales bordent chacune un empilement de sièges-relax (8, 10,12,14) et(9,11,13,15), au même pas vertical p, tous étant, soit de largeur constante (d, fig. 4,5), soit trapézoïdaux (a, b, fig. 7,8), superposés en tête-bêche, caractérisé en ce que les deux dits empilements sont distants l'un de l'autre, de façon à créer un espace intermédiaire, divisé en casiers de rangement de bagages superposés.

2. Bloc selon la revendication 1, caractérisé en ce que les dits casiers sont superposés à raison de deux par étage pour les deux occupants voisins d'un même niveau.

3. Bloc selon les revendications 1 et 2, caractérisé en ce que les deux sièges-relax de chaque étage (8,9) à(14,15), se partagent leur dit casier de rangement correspondant (16 à 23), au moyen d'une cloison de séparation (30,30') transversale passant par le milieu du bloc (3,3'), chaque casier de rangement individuel étant un parallélépipède aux six faces closes, à l'exception de l'ouverture d'accès des bagages (31 à 38) pratiquée, avec une inclinaison sur l'horizontale dans sa face latérale au-dessus de tout le profil relax côté tête.

4. Bloc selon les revendications 1 à 3, caractérisé en ce que les hauteurs h superposées du casier (44,44') de rangement sont uniformisées depuis le sol (28) jusqu'au plafond (29) pour pouvoir accueillir les mêmes grandes valises, qui pivotent et sont posées ensuite en 25,25').

5. Bloc selon l'ensemble des revendications 1 à 4, caractérisé en ce que les surfaces d'appui (45) sont de légère pente symétrique, le point bas vers le centre.

6. Bloc selon l'ensemble des revendications 1 à 5, caractérisé en ce que chaque siège trapézoïdal (8',12') (10',14') empiète côté pied par une enclave d'aisance (26,27) dans le casier de rangement (17',21')(19',23') du siège relax voisin de même étage (9',13')(11',15') par déplacement de la cloison locale en (46,47).

7. Bloc selon l'ensemble des revendications 1 à 6, caractérisé en ce qu'un appui-coude interne (40,41), (42',43') est situé sous le profil du relax (8,9) dans la partie haute des blocs de rangement voisin.

8. Véhicule de transport caractérisé en ce qu'il comprend une suite rectiligne médiane continue (2,2') de blocs (3,3') identiques selon les revendications 1 à 7, à sièges-relax de largeur constante (fig. 4,5) ou trapézoïdaux (figs. 6,7), tous orientés dans le sens de l'axe du véhicule (1,1'), longitudinalement, cette suite étant flanquée de deux couloirs longitudinaux latéraux (4,4'), l'accès aux étages supérieurs se faisant au moyen d'échelles verticales fixes (6), solidaires de la dite paroi externe (5) des dits couloirs, disposées chacune face au milieu de chaque bloc (3,3').

9. Véhicule selon la revendication 8, caractérisé en ce que des rateliers à skis verticaux S sont disposés contre les fenêtres (39) entre échelles (6).

10. Véhicule selon les revendications 8 et 9, caractérisé en ce que l'air conditionné y est amené par un ou deux collecteurs (48) longitudinaux horizontaux au sol des rangements inférieurs, qui alimentent en dérivation des gainages verticaux (49) longeant les parois verticales des dits rangements, et débouchant du côté tête de chaque loge d'occupant des dits relax.

**Patentansprüche**

1. Modul (3, 3') in der Form eines rechtwinkligen Parallelepipeds zur Aufnahme von Reisenden und ihrem Gepäck in Transitstationen und in Luft-, Wasser-, Straßen- und Schienenfahrzeugen, das zwei vertikale gegenüberliegende Seiten mit einer eventuellen Verbindung mit anderen identischen Blöcken (2, 2') im gerader Linie aufweist, während die beiden anderen vertikalen, äußeren Seiten jeweils eine Reihe von Ruhesesseln (8, 10, 12, 14 und 9, 11, 13, 15) mit gleichem vertikalen Abstand p begrenzen, die alle, sei es mit konstanter Breite (d, Fig. 4, 5), sei es trapezförmig (a, b, Fig. 7, 8), parallel und im entgegengesetzten Sinne übereinander angeordnet sind, dadurch gekennzeichnet, daß die beiden Reihen soweit voneinander entfernt sind, daß sie einen Zwischenraum bilden, der in Fächer übereinander angeordneten Gepäcks unterteilt ist.

2. Modul nach Anspruch 1, dadurch gekennzeichnet, daß die Fächer paarweise pro Etage für die benachbarten Insassen einer gleichen Ebene übereinander angeordnet sind.

3. Modul nach Ansprüchen 1 und 2, dadurch gekennzeichnet, daß sich die beiden Ruhesessel jeder Etage (8, 9 bis 14, 15) ihr entsprechendes Fach (16 bis 23) mittels einer transversalen Trennwand (30, 30'), die mitten durch das Modul (3, 3') läuft, teilen, wobei jedes einzelne Fach ein Parallelepiped mit sechs geschlossenen Flächen ist mit Ausnahme der Gepäckzugangsöffnung (31 bis 38), die mit einer Neigung zur Horizontalen in eine laterale Seite oberhalb des gesamten Ruhebereichs an der Seite des Kopfs angeordnet ist.

4. Modul nach Anspruch 1 bis 3, dadurch gekennzeichnet, daß die übereinander angeordneten Höhen h der Fächer einheitlich vom Boden (28) bis zur Decke (29) sind, um die gleichen großen Koffer aufnehmen zu können, die sich umdrehen und anschließend in (25, 25') angeordnet sind.

5. Modul nach der Gesamtheit der Ansprüche 1 bis 4, dadurch gekennzeichnet, daß die Stützflächen (45) eine leichte symmetrische Neigung aufweisen, wobei der tiefere Punkt zur Mitte liegt.

6. Modul nach der Gesamtheit der Ansprüche 1 bis 5, dadurch gekennzeichnet, daß jeder trapezförmige Sessel (8', 12') (10', 14') am Fußkeil mit einer Komfortabilitätseinbuchtung (26, 27) in das Fach (17', 21') (19', 23') des benachbarten Ruhesessels (9', 13') (11', 15') der gleichen Etage durch eine örtliche Verschiebung der Trennwand bei (46, 47) eindringt.

7. Modul nach der Gesamtheit der Ansprüche 1 bis 6, dadurch gekennzeichnet, daß eine interne Ellenbogenstütze (40, 41), (42', 43') sich unter dem Profil des Ruhesessels (8, 9) in dem oberen Teil der benachbarten Fächermodule befindet.

8. Transportfahrzeug, dadurch gekennzeichnet, daß es eine geradlinige, in der Mitte gelegene fortgesetzte Folge (2, 2') von identischen Modulen (3, 3') nach den Ansprüchen 1 bis 7 aufweist mit Ruhesesseln mit konstanter Breite (Fig. 4, 5) oder trapezförmigen Ruhesesseln (Fig. 6, 7), die alle longitudinal in Richtung der Achse des Fahrzeugs (1, 1') ausgerichtet sind, wobei diese Folge von zwei seitlichen, longitudinalen Gängen (4, 4') umgeben ist und der Zugang zu den oberen Etagen über vertikale, feste Leitern (6) erfolgt, die mit den äußeren Seitenwänden (5) der Gänge verbunden sind und von denen jede gegenüber der Mitte jedes Moduls (3, 3') angeordnet ist.

9. Fahrzeug nach Anspruch 8, dadurch gekennzeichnet, daß vertikale Skigatter S gegen die Fenster (39) zwischen den Leitern (6) angeordnet sind.

10. Fahrzeug nach den Ansprüchen 8 und 9, dadurch gekennzeichnet, daß klimatisierte Luft dort durch ein oder zwei longitudinale und horizontale Kollektoren (48) am Boden der unteren Fächer herangeführt wird, die nebeneinander vertikale Kanäle (49), die entlang der vertikalen Wände der Fächer laufen und am Kopfende jedes Insassenbereichs der Ruhesessel münden, versorgen.

## Claims

1. Rectangular parallelepipedal block (3, 3') for accommodating passengers and their luggage in transit locations and air, sea, road and rail vehicles, having two opposite vertical faces, for joining if necessary with other identical blocks in straight succession (2, 2'), while the two other lateral vertical faces each border a stack of reclining seats (8, 10, 12, 14) and (9, 11, 13, 15), with the same vertical span p, all being either of constant width (d, Figs. 4, 5) or trapezoidal (a, b, Figs. 7, 8), superimposed head to foot, characterized in that the two said stacks are separated from each other, so as to create an intermediate space, divided into superimposed luggage storage compartments.

2. Block according to Claim 1, characterized in that the said compartments are superimposed in pairs per tier for the two adjacent occupants of a same level.

3. Block according to Claims 1 and 2, characterized in that the two reclining seats of each tier (8, 9) to (14, 15) have their said corresponding storage compartment (16 to 23, divided up, by means of a transverse separating partition (30, 30') passing through the middle of the block (3, 3'), each individual storage compartment being a parallelepiped with six closed faces, except for the luggage access opening (31 to 38) formed, at an angle with respect to the horizontal, in its lateral face above the entire recliner profile, on the head side.

4. Block according to Claims 1 to 3, characterized in that the superimposed heights h of the storage compartments (44, 44') are standardized from the floor (28) to the ceiling (29) so as to be able to receive the same large suitcases, which pivot and are then placed at (25, 25').

5. Block according to all of Claims 1 to 4, characterized in that the support surfaces (45) have a slight symmetrical slope, the low point being towards the centre.

6. Block according to all of Claims 1 to 5, characterized in that each trapezoidal seat (8', 12') (10', 14') encroaches on the feet side by means of an assistance enclave (26, 27) into the storage compartment (17', 21') (19', 23') of the adjacent reclining seat of the same tier (9', 13') (11', 15') by means of displacement of the local partition to (46, 47).

7. Block according to all of Claims 1 to 6, characterized in that an internal elbow support (40, 41) (42', 43') is situated below the profile of the recliner (8, 9) at the top of the adjacently arranged blocks.

8. Transport vehicle, characterized in that it comprises a continuous middle straight succession (2, 2') of identical blocks (3, 3') according to Claims 1 to 7, with reclining seats which are of constant width (Figs. 4, 5) or trapezoidal (Figs. 6, 7), all oriented in the direction of the axis of the vehicle (1, 1'), longitudinally, this succession being flanked by two lateral longitudinal corridors (4, 4'), access to the upper tiers being effected by means of fixed vertical ladders (6), integral with the said outer wall (5) of the said corridors, each arranged facing the middle of each block (3, 3').

9. Vehicle according to Claim 8, characterized in that vertical ski racks S are arranged against the windows (39) between ladders (6).

10. Vehicle according to Claims 8 and 9, characterized in that conditioned air is brought into it by means of one or two horizontal longitudinal headers (48) in the floor of the lower storage areas, which supply via branched connections vertical tubes (49) arranged along the vertical walls of the said storage areas and emerging on the head side of each accommodation cell of the said recliners.

FIG. 1

FIG. 6

FIG. 5

FIG. 3

FIG. 2

# FIG. 4

FIG. 7

FIG. 8